# EUROPÄISCHE PATENTSCHRIFT

(11) **EP 3 478 957 B1**
(45) Veröffentlichungstag und Bekanntmachung des Hinweises auf die Patenterteilung: **13.05.2020**
(21) Anmeldenummer: 17725975.1
(22) Anmeldetag: 29.05.2017
(51) Int. Cl.: F02M 21/02

(54) **VENTIL ZUM EINDÜSEN VON GASFÖRMIGEM KRAFTSTOFF**
VALVE FOR INJECTING GASEOUS FUEL
SOUPAPE D'INJECTION D'UN CARBURANT GAZEUX

(30) Priorität: 04.07.2016 DE 102016212075
(43) Veröffentlichungstag der Anmeldung: 08.05.2019
(73) Patentinhaber: Robert Bosch GmbH, 70442 Stuttgart (DE)
(72) Erfinder: STUKE, Bernd, 71229 Leonberg (DE); OHLHAFER, Olaf, 74391 Erligheim (DE); JAEGLE, Felix, 71254 Ditzingen (DE); EIBERGER, Fabian, 70839 Gerlingen (DE)
(86) Internationale Anmeldenummer: PCT/EP2017/062871
(87) Internationale Veröffentlichungsnummer: WO 2018/007068

(56) Entgegenhaltungen:
- DE-A1-102014 212 320
- DE-A1-102014 224 348
- DE-A1-102014 226 421
- DE-B3-102009 012 688

## Beschreibung

Die Erfindung betrifft ein Ventil, wie es vorzugsweise zur Eindüsung von gasförmigem Kraftstoff in einen Brennraum einer Brennkraftmaschine oder in einen Ansaugtrakt einer Brennkraftmaschine Verwendung findet.

### Stand der Technik

Die Erfindung betrifft ein Ventil zur Eindüsung von gasförmigem Kraftstoff, wie es beispielsweise aus den Offenlegungsschriften DE 10 2014 212 320 A1 und DE 10 2014 224 348 A1 bekannt ist.

Ein solches Gasventil weist einen Ventilteller und eine Ventilplatte mit einem darin ausgebildeten Ventilsitz auf, wobei der Ventilteller mit dem Ventilsitz zum Öffnen und Schließen des Gasventils zusammenwirkt. Durch den Hub des Ventiltellers kann ein großer Einströmquerschnitt relativ schnell auf- und zugeschaltet werden.

Typischerweise sind die bekannten Gasventile zur Eindüsung von gasförmigem Kraftstoff mit niedrigen Drücken von unter 30 bar geeignet. Die Bewegung des Schließelements im gasgefüllten Druckraum wird in der Regel durch einen PiezoAktor oder einen Elektromagneten bewältigt, welcher direkt auf die Düsennadel einwirkt. Treten nun deutlich höhere Gasdrücke von beispielsweise 300 bis 500 bar auf, können die bekannten Gasventile nicht mehr verwendet werden. Denn bei sehr hohen Gasdrücken treten Kräfte auf die Düsennadel auf, die von den elektrischen Aktoren oder dem Elektromagneten nicht mehr ohne Weiteres überwunden werden können. Zur Überwindung dieser Kräfte müssten die Aktoren deutlich größer ausgeführt werden, was jedoch aufgrund der größeren Platzeinnahme im Gasventil nicht wünschenswert ist. Darüber hinaus erhöht es die Kosten und den Energieverbrauch des gesamten Systems.

### Vorteile der Erfindung

Das erfindungsgemäße Ventil mit den kennzeichnenden Merkmalen des Anspruchs 1 weist den Vorteil auf, dass es für den Einsatz von gasförmigem Kraftstoff mit hohen Drücken geeignet ist, ohne zusätzliche Bauteile oder den Einsatz von deutlich größeren Aktoren. Dazu weist das Ventil zum Eindüsen von gasförmigem Kraftstoff ein Ventilgehäuse auf, in welchem ein mit gasförmigem Kraftstoff befüllbarer Druckraum ausgebildet ist. In diesem Druckraum ist eine längsverschiebbare, kolbenförmige Düsennadel angeordnet, wobei an der Düsennadel ein erster Dichtsitz ausgebildet ist. Mit diesem ersten Dichtsitz wirkt die Düsennadel mit einem an dem Ventilgehäuse ausgebildeten Absatz zum Öffnen und Schließen eines Strömungsquerschnitts von gasförmigem Kraftstoff zusammen. Außerdem sind in dem Druckraum ein Hochdruckbereich und ein Niederdruckbereich ausgebildet. Darüber hinaus ist an einem Ventilelement ein zweiter Dichtsitz ausgebildet, der bezüglich der Längsachse der Düsennadel axial versetzt zu dem ersten Dichtsitz angeordnet ist. Dabei stützt sich das Ventilelement an einem elastischen Element ab, welches den Hochdruckbereich von dem Niederdruckbereich trennt.

Durch den Einsatz zweier hintereinander geschalteter Dichtsitze kann ein Druckausgleich erreicht werden, wodurch die Kräfte auf die Düsennadel in Längsrichtung weitgehend reduziert werden. Somit sind keine großen Aktorkräfte mehr nötig, um die Düsennadel in Längsrichtung zu bewegen. Es können daher die bekannten Aktoren verwendet werden, ohne dass das Gasventil zusätzliche Bauteile benötigt. Außerdem ist auch kein Gasrücklauf notwendig, um etwaige Steuermengen zurückzuführen.

In einer ersten vorteilhaften Ausgestaltung des Erfindungsgedankens ist der Durchmesser d des ersten Dichtsitzes zumindest annähernd so groß wie der Durchmesser d des zweiten Dichtsitzes. Dabei wird der Durchmesser d der Dichtsitze hier als der kürzeste Abstand zwischen dem ersten Dichtsitz bzw. dem zweiten Dichtsitz und der Längsachse des Ventils definiert. Wird der Durchmesser d des ersten Dichtsitzes zumindest annähernd so groß wie der Durchmesser d des zweiten Dichtsitzes gewählt, so können die Kräfte auf die Düsennadel weitestgehend so vermindert werden, dass ein fast vollständiger Druckausgleich erreicht wird und die Düsennadel mit geringer Kraft in Längsrichtung bewegt werden kann.

In einer weiteren vorteilhaften Ausgestaltung des Erfindungsgedankens ist das elastische Element als Metallbalg ausgebildet. Dieser ist einerseits aus einem elastischen Material und eignet sich andererseits als Trennvorrichtung von zwei Bereichen mit unterschiedlich hohen Kraftstoffdrücken, da der Metallbalg bei geeigneter Materialwahl hohen Gasdrücken standhalten kann. Vorteilhafterweise stützt sich der Metallbalg mit einem anderen Ende an einem Absatz der Düsennadel ab. Dadurch wird das Ventilelement, welches sich auch an dem Metallbalg abstützt, durch die Bewegung der Düsennadel mitbewegt. Außerdem dient das als Metallbalg ausgebildete elastische Element zum Toleranzausgleich, da zwei starre Sitze an einem Bauteil nicht gleichzeitig mit derselben Kontaktkraft schließen können.

In einer vorteilhaften Weiterbildung der Erfindung ist es vorgesehen, dass der erste Dichtsitz an einem Endbereich der Düsennadel ausgebildet ist.

In einer weiteren vorteilhaften Weiterbildung der Erfindung ist das Ventilelement ringförmig ausgebildet und umgibt die Düsennadel. Diese Ringform ermöglicht die Ausbildung des zweiten Dichtsitzes an dem Ventilelement.

In weiterer vorteilhafter Ausgestaltung des Erfindungsgedankens weist die Düsennadel eine Längsbohrung auf, die mit dem Druckraum verbunden ist. Dadurch wird ein weiterer Kraftstoffpfad eröffnet, über den unter Druck stehender gasförmiger Kraftstoff in Richtung der Eindüsöffnungen geleitet werden kann.

In weiterer Ausgestaltung der Erfindung ist es vorgesehen, dass in dem Ventilgehäuse eine Magnetspule und ein Magnetanker angeordnet sind. Dabei ist der Magnetanker mit der Düsennadel verbunden, so dass bei aktiver Magnetspule die Düsennadel in Längsrichtung mittels des Magnetankers bewegt werden kann. In einer vorteilhaften Weitergestaltung des Erfindungsgedankens ist es vorgesehen, dass in dem Druckraum ein stempelförmiges Element angeordnet ist, welches in der Längsbohrung der Düsennadel aufgenommen ist. Vorteilhafterweise bildet das stempelförmige Element ein Teil des Ventilgehäuses.

In vorteilhafter Weiterbildung des Erfindungsgedankens ist in dem Druckraum ein mit der Düsennadel verbundener Ventilkolben angeordnet, welcher einen Hohlraum aufweist. Vorteilhafterweise ist in dem Hohlraum ein Halterungselement angeordnet, welches ein Teil des Ventilgehäuses bildet. Dabei stützt sich vorteilhafterweise das elastische Element mit einem anderen Ende an dem Halterungselement ab.

In vorteilhafter Ausgestaltung des Erfindungsgedankens ist in dem Niederdruckbereich eine Schließfeder angeordnet. Vorteilhafterweise beaufschlagt die Schließfeder die Düsennadel entweder direkt oder mittelbar mit einer Kraft, wodurch die Düsennadel mit dem an dem Ventilgehäuse ausgebildeten Absatz so zusammenwirkt, dass der Strömungsquerschnitt des gasförmigen Kraftstoffs geschlossen ist.

### Zeichnungen

In der Zeichnung ist ein erfindungsgemäßes Ventil dargestellt. Es zeigt in
- Fig. 1a: ein erfindungsgemäßes Ventil im Längsschnitt in geschlossener Position,
- Fig. 1b: dasselbe Ventil in geöffneter Position,
- Fig. 2a: eine weitere Ausführungsform des erfindungsgemäßen Ventils im Längsschnitt in geschlossener Position,
- Fig. 2b: dieselbe Ausführungsform des erfindungsgemäßen Ventils im Längsschnitt in geöffneter Position,
- Fig. 3a: eine weitere Ausführungsform des erfindungsgemäßen Ventils im Längsschnitt in geschlossener Position,
- Fig. 3b: dieselbe Ausführungsform des erfindungsgemäßen Ventils im Längsschnitt in geöffneter Position,
- Fig. 4a: eine weitere Ausführungsform des erfindungsgemäßen Ventils im Längsschnitt in geschlossener Position und
- Fig. 4b: dieselbe Ausführungsform des erfindungsgemäßen Ventils im Längsschnitt in geöffneter Position.

### Beschreibung des Ausführungsbeispiels

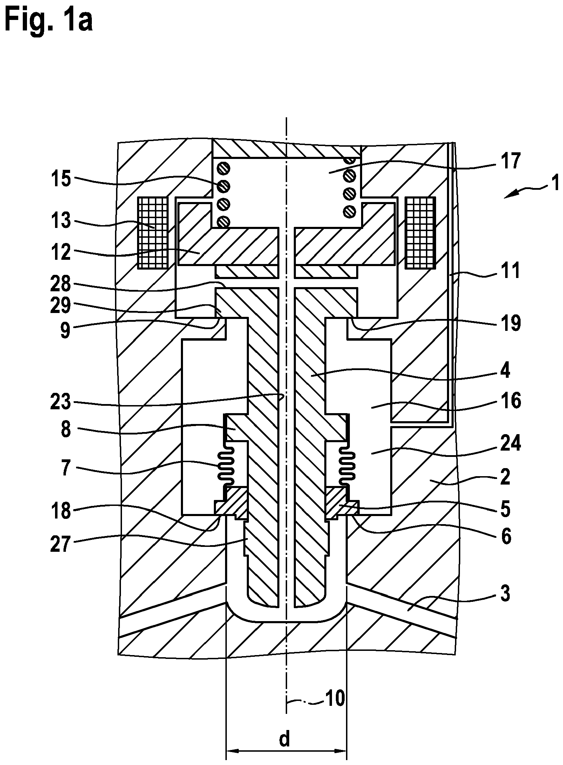

In Figur 1a ist ein erfindungsgemäßes Ventil im Längsschnitt schematisch dargestellt. Das Ventil 1 weist ein Ventilgehäuse 2 auf, das eine Magnetspule 13 umfasst. Im Innern des Ventilgehäuses 2 ist ein Druckraum 24 ausgebildet, der über mindestens einen Zufuhrkanal 11 mit gasförmigem Kraftstoff befüllt werden kann. Des Weiteren weist das Ventilgehäuse 2 mindestens eine Eindüsöffnung 3 auf, durch welche gasförmiger Kraftstoff aus dem Druckraum 24 in einen Brennraum einer Brennkraftmaschine oder einen Ansaugtrakt einer solchen ausströmen kann. In dem Druckraum 24 sind weiterhin eine längsbewegliche, kolbenförmige Düsennadel 4 und ein Magnetanker 12 angeordnet, wobei die Düsennadel 4 und der Magnetanker 12 fest miteinander verbunden ist. Die Düsennadel 4 weist eine Längsbohrung 23 und eine Querbohrung 28 auf, über welche gasförmiger Kraftstoff in Richtung der mindestens einen Eindüsöffnung 3 strömen kann. Zwischen dem Magnetanker 12 und dem Ventilgehäuse 2 ist eine Schließfeder 15 angeordnet, welche den Magnetanker 12 und somit auch die Düsennadel 4 mit einer Schließkraft in Richtung der wenigstens einen Eindüsöffnung 3 beaufschlagt. Der dem Magnetanker 12 zugewandte Endbereich der Düsennadel 4 weist einen Absatz 29 auf, an welchem ein erster Dichtsitz 19 ausgebildet ist, mit dem die Düsennadel 4 an einem an dem Ventilgehäuse 2 ausgebildeten Absatz 9 anliegt, wodurch ein erster Strömungsquerschnitt von gasförmigem Kraftstoff geschlossen ist.

Weiter ist in dem Druckraum 24 ein ringförmiges Ventilelement 5 angeordnet, welches sich an einem Absatz 27 der Düsennadel 4 abstützt und diese umgibt. Außerdem ist zwischen dem Ventilelement 5 und einem weiteren Absatz 8 der Düsennadel 4 ein als Metallbalg ausgebildetes elastisches Element 7 angeordnet, welches sich einerseits an dem Absatz 8 der Düsennadel 4 und andererseits an dem Ventilelement 5 abstützt und somit vorgespannt ist. Der Metallbalg 7 ist dabei fest und dichtend mit dem Absatz 8 der Düsennadel 4 und dem Ventilelement 5 verbunden, beispielsweise durch Verschweißung. An dem Ventilelement 5 ist ein zweiter Dichtsitz 18 ausgebildet, mit welchem das Ventilelement 5 an einem Absatz 6 des Ventilgehäuses 2 anliegt. Ein zweiter Strömungsquerschnitt von gasförmigem Kraftstoff ist dadurch geschlossen. Das Ventil 1 befindet sich daher in Figur 1a in geschlossener Position, da die Magnetspule 13 nicht bestromt ist und die Schließfeder 15 die Düsennadel 4 mit einer Schließkraft in Richtung der Eindüsöffnungen 3 beaufschlagt, so dass der erste und der zweite Strömungsquerschnitt geschlossen sind.

Bezüglich einer Längsachse 10 des Ventils 1 ist der zweite Dichtsitz 18 axial versetzt zu dem ersten Dichtsitz 19 angeordnet. Durch diese Anordnung der Düsennadel 4 in dem Druckraum 24 wird dieser in zwei Bereiche aufgeteilt, einen Hochdruckbereich 16 und einen Niederdruckbereich 17. Dabei ist der Hochdruckbereich 16 zwischen dem Ventilgehäuse 2 und der Düsennadel 4 angeordnet und wird durch den ersten Dichtsitz 19 und den zweiten Dichtsitz 18 begrenzt. Der Niederdruckbereich 17 umfasst den übrigen Druckraum 24.

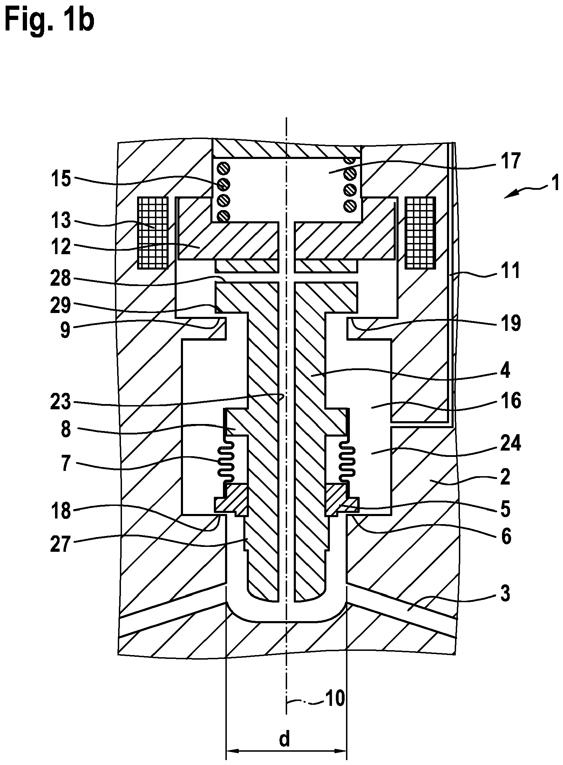

Wird die Magnetspule 13 bestromt, wie in Figur 1b gezeigt, bewegt sich der Magnetanker 12 entgegen der Richtung der mindestens einen Eindüsöffnung 3, wodurch die Düsennadel 4, welche fest mit dem Magnetanker 12 verbunden ist, ebenfalls in diese Richtung bewegt wird. Dadurch hebt die Düsennadel 4 mit dem ersten Dichtsitz 19 von dem an dem Ventilgehäuse 2 ausgebildeten Absatz 9 ab. Der erste Strömungsquerschnitt von gasförmigem Kraftstoff wird somit freigegeben. Der Metallbalg 7, welcher sich an dem Absatz 8 der Düsennadel 4 abstützt, wird durch die Bewegung der Düsennadel 4 in Längsrichtung entspannt, bis das Ventilelement 5 mit dem Absatz 27 der Düsennadel 4 in Kontakt kommt und als Mitnehmer wirkt. Dadurch hebt das Ventilelement 5 von dem Absatz 6 des Ventilgehäuses 2 ab und gibt den zweiten Dichtsitz 18 frei und damit den zweiten Strömungsquerschnitt. Der Hochdruckbereich 16 ist nun über beide Strömungsquerschnitte mit dem Niederdruckbereich 17 verbunden und gasförmiger Kraftstoff aus dem Hochdruckbereich 16 strömt über die Eindüsöffnungen 3 in einen Brennraum oder einen Ansaugtrakt einer Brennkraftmaschine.

Bei Abschaltung der Magnetspule 13 enden die magnetischen Kräfte auf den Magnetanker 12. Durch die Kraft der Schließfeder 15 wird der Magnetanker 12 und die damit fest verbundene Düsennadel 4 in Richtung der Eindüsöffnungen 3 gedrückt, wodurch die beiden Strömungsquerschnitte wieder geschlossen werden und damit ein gasförmiger Kraftstofffluss unterbunden wird.

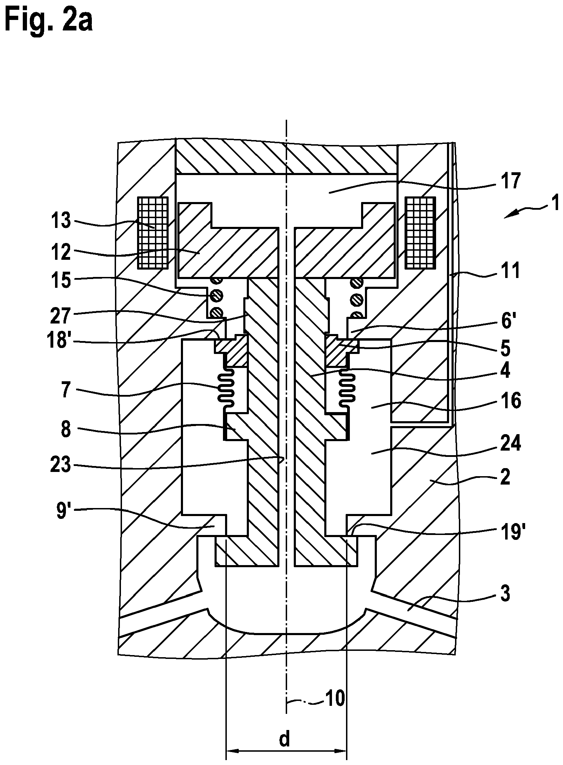

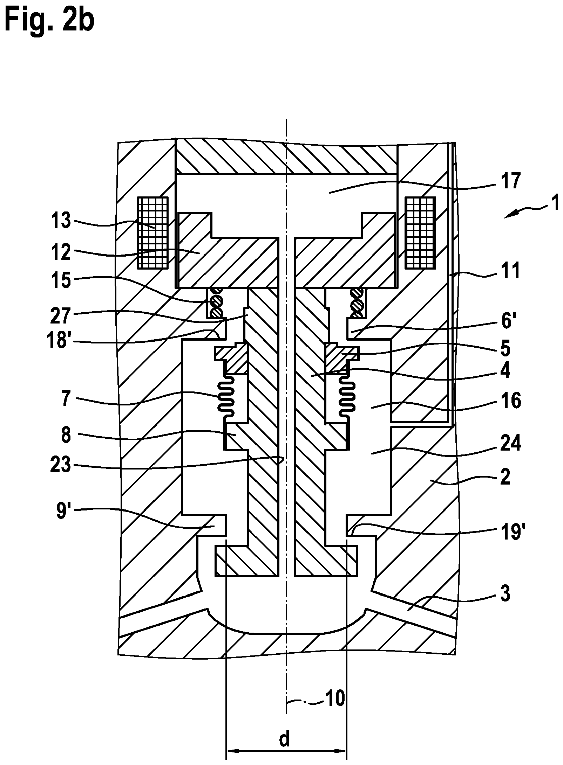

In den Figuren 2 (a, b) bis 4 (a, b) sind schematisch verschiedene Ausführungsbeispiele des erfindungsgemäßen Ventils 1 dargestellt, wobei identische Bauteile die gleichen Bezugsziffern tragen wie in Figur 1a und 1b.

Die Figuren 2a und 2b zeigen eine Variante des Ventils 1 aus der Figur 1 in schematischer Darstellung. In der Figur 2a stützt sich die Schließfeder 15 zwischen dem Magnetanker 12 und einem Absatz 6' des Ventilgehäuses 2 ab und beaufschlagt den Magnetanker 12 mit einer Kraft entgegen der Richtung der mindestens einen Eindüsöffnung 3. Dadurch wird die Düsennadel 4 mit einem ersten Dichtsitz 19' an einen Absatz 9' des Ventilgehäuses 2 gedrückt und schließt somit einen ersten Strömungsquerschnitt in Richtung der Eindüsöffnungen 3. Das ringförmige Ventilelement 5 wird mit einem zweiten Dichtsitz 18' mittels des Metallbalgs 7 mit einer Kraft in Richtung des Magnetankers 12 an einen Absatz 6' des Ventilgehäuses 2 gedrückt. Damit ist auch ein zweiter Strömungsquerschnitt in Richtung der Eindüsöffnungen 3 geschlossen. Das Ventil 1 ist somit in seiner geschlossenen Position.

In der Figur 2b wird die Magnetspule 13 bestromt, wodurch der Magnetanker 12 aufgrund der Magnetkraft in Richtung der Eindüsöffnungen 3 bewegt wird. Die mit dem Magnetanker 12 fest verbundene Düsennadel 4 bewegt sich ebenfalls in Richtung der Eindüsöffnungen 3. Dadurch hebt die Düsennadel 4 mit ihrem ersten Dichtsitz 19' von dem Absatz 6' des Ventilgehäuses 2 ab und gibt den ersten Strömungsquerschnitt frei. Unter hohem Druck stehender gasförmiger Kraftstoff wird nun aus dem Hochdruckbereich 16 über die Eindüsöffnungen 3 den Brennraum oder den Ansaugtrakt der Brennkraftmaschine eingedüst. Der Metallbalg 7 wird durch den Bewegungsvorgang der Düsennadel 4 entspannt, bis das Ventilelement 5 mit dem Absatz 27 der Düsennadel 4 in Kontakt kommt, wodurch das Ventilelement 5 mit seinem zweiten Dichtsitz 18' von dem Absatz 9' des Ventilgehäuses 2 abhebt und den zweiten Strömungsquerschnitt freigibt. Das Ventil 1 ist nun in seiner geöffneten Position.

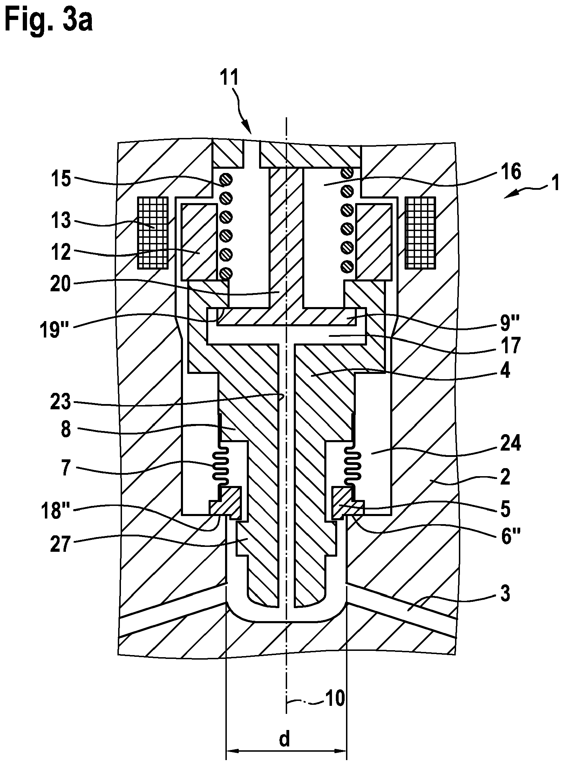

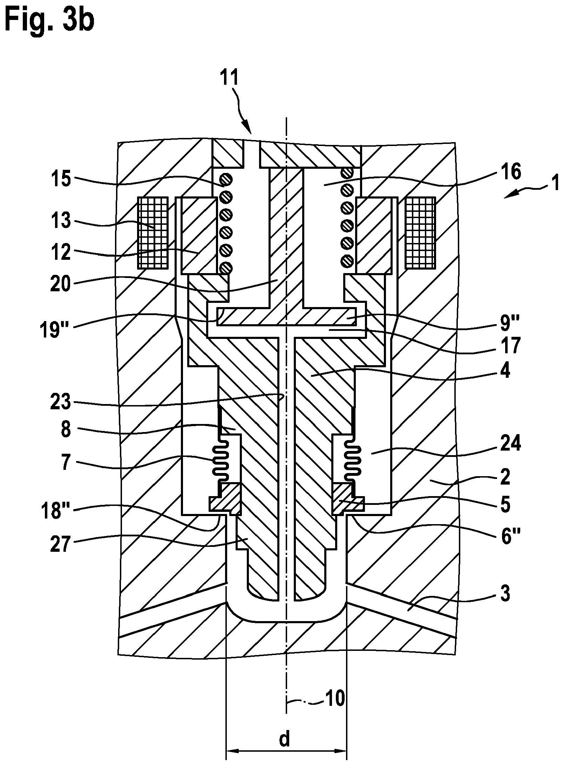

In den Figuren 3a und 3b ist eine weitere Variante des Ventils 1 aus der Figur 1 dargestellt. In dem Druckraum 24 ist, wie in Figur 3a gezeigt, ein stempelförmiges Element 20 angeordnet, welches in der Längsbohrung 23 der Düsennadel 4 aufgenommen ist. Außerdem ist das stempelförmige Element 20 fest mit dem Ventilgehäuse 2 verbunden und bildet somit ein Teil des Ventilgehäuses 2. Die Schließfeder 15 stützt sich in diesem Ausführungsbeispiel zwischen dem Ventilgehäuse 2 und der Düsennadel 4 ab. Dabei wird die Düsennadel 4 durch die Kraft der Schließfeder 15 in Richtung der Eindüsöffnungen 3 an einen Absatz 9" des stempelförmigen Elements 20 gedrückt und ein erster Dichtsitz 19" gebildet. Ein erster Strömungsquerschnitt von gasförmigem Kraftstoff ist somit geschlossen. Das ringförmige Ventilelement 5 stützt sich an einem Absatz 6" des Ventilgehäuses 2 ab und bildet somit einen zweiten Dichtsitz 18". Dadurch ist auch ein zweiter Strömungsquerschnitt in Richtung der Eindüsöffnungen 3 geschlossen. Durch den Einsatz des stempelförmigen Elements 20 kann der Hochdruckbereich 16 erweitert werden, sodass im Vergleich zur Figur 1 und Figur 2 der Magnetanker 12 und die Schließfeder 15 sowie das stempelförmige Element 20 ebenfalls im Hochdruckbereich 16 angeordnet sind.

In der Figur 3b ist wieder im Vergleich zur Figur 3a (geschlossene Position des Ventils 1) das Ventil 1 in seiner geöffneten Position dargestellt. Bei Bestromung der Magnetspule 13 wird der Magnetanker 12 und somit auch die Düsennadel 4 mittels der Magnetkraft der Magnetspule 13 entgegen der Richtung der Eindüsöffnungen 3 gezogen. Dadurch hebt die Düsennadel 4 von dem Absatz 9" ab, welcher an dem stempelförmigen Element 20 ausgebildet ist. Der erste Strömungsquerschnitt wird freigegeben und gasförmiger Kraftstoff wird von dem Hochdruckbereich 16 über die Eindüsöffnungen 3 in den Brennraum oder den Ansaugtrakt der Brennkraftmaschine eingedüst. Wie in dem Ausführungsbeispiel aus der Figur 1 bereits erläutert, bewegt sich das Ventilelement 5 bei Kontaktaufnahme des Ventilelements 5 mit dem Absatz 27 der Düsennadel 4 in Richtung des Magnetankers 12 und gibt den zweiten Dichtsitz 18" frei.

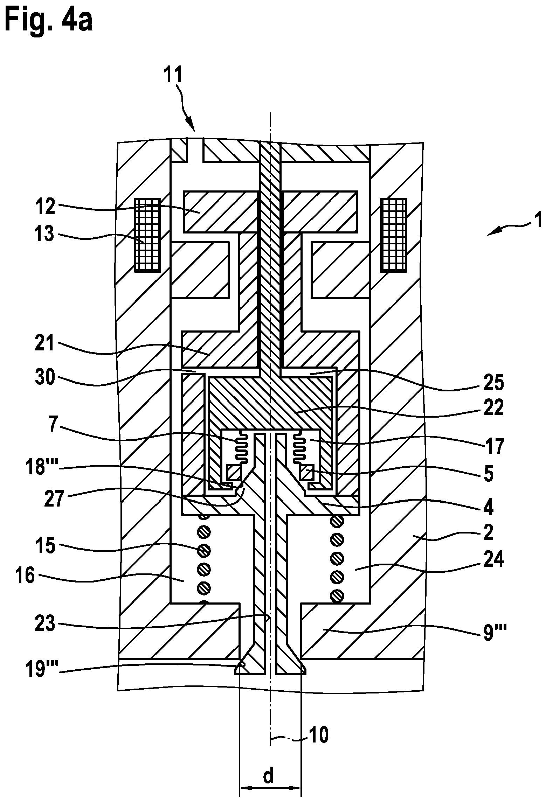

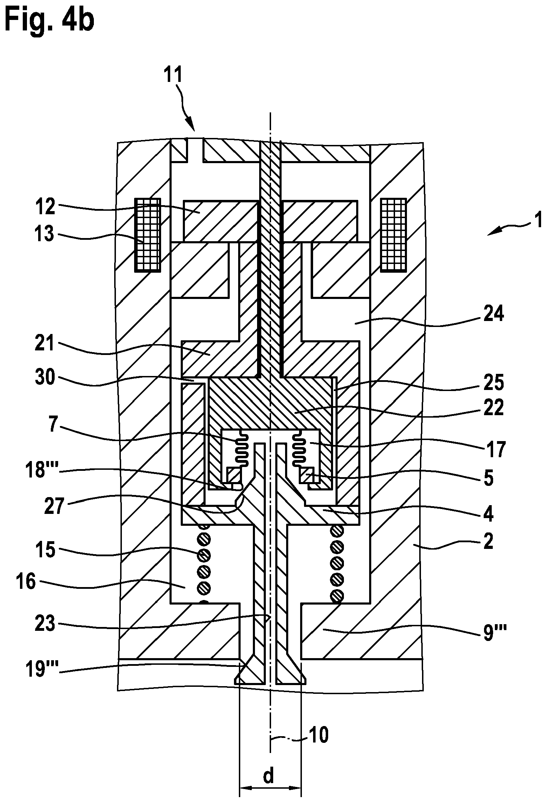

In den Figuren 4a und 4b ist eine weitere Variante des Ventils 1 aus der Figur 1 gezeigt. Dabei ist, wie in der Figur 4a gezeigt, in dem Druckraum 24 ein Ventilkolben 21 angeordnet, welcher einerseits fest mit dem Magnetanker 12 und andererseits fest mit der Düsennadel 4 verbunden ist. Dabei weist der Ventilkolben 21 einen Hohlraum 25 auf. In diesem Hohlraum 25 ist ein Halterungselement 22 angeordnet, welches fest mit dem Ventilgehäuse 2 verbunden ist und ein Teil des Ventilgehäuses 2 bildet. Das ringförmige Ventilelement 5 ist in diesem Ausführungsbeispiel der Figur 4 zwischen dem Halterungselement 22 und der Düsennadel 4 angeordnet. Es wird durch den Metallbalg 7 an die Düsennadel 4 gedrückt und bildet somit einen zweiten Dichtsitz 18"', wodurch ein zweiter Strömungsquerschnitt von gasförmigem Kraftstoff geschlossen wird. Der Metallbalg 7 stützt sich dabei an dem Halterungselement 22 ab. Der Ventilkolben 21 weist einen Durchlasskanal 30 auf, damit der Hohlraum 25 des Ventilkolbens 21 ebenfalls mit gasförmigem Kraftstoff, welcher unter hohem Druck steht, befüllt werden kann. Die Schließfeder 15 stützt sich zwischen der Düsennadel 4 und einem Absatz 9"' des Ventilgehäuses 2 ab. Durch die Schließfeder 15 wird die Düsennadel 4 mit einer Kraft in Richtung des Magnetankers 12 beaufschlagt. Dabei bildet die Düsennadel 4 an einem Absatz 9"' des Ventilgehäuses 2 einen ersten Dichtsitz 19"'. Dabei wird ein erster Strömungsquerschnitt geschlossen, durch welchen gasförmiger Kraftstoff aus dem Druckraum 24 in den Brennraum oder den Ansaugtrakt der Brennkraftmaschine eingedüst werden kann.

In der Figur 4b ist das Ventil 1 aus der Figur 4a in geöffneter Position gezeigt. Mit Bestromung der Magnetspule 13 wird eine magnetische Kraft aufgebaut, welche den Magnetanker 12 in Richtung des Brennraums oder des Ansaugtrakts der Brennkraftmaschine drückt. Da der Ventilkolben 21 fest mit dem Magnetanker 12 verbunden ist, wird dieser auch in Richtung des Brennraums gedrückt sowie die mit dem Ventilkolben 21 fest verbundene Düsennadel 4. Dabei hebt die Düsennadel 4 mit ihrem ersten Dichtsitz 19"' von dem Absatz 9"' des Ventilgehäuses 2 ab. Der erste Strömungsquerschnitt von gasförmigem Kraftstoff in Richtung des Brennraums oder des Ansaugtrakts der Brennkraftmaschine wird freigegeben. Durch die Bewegung der Düsennadel 4 hebt das mit dem Metallbalg 7 fest verbundene ringförmige Ventilelement 5 mit seinem zweiten Dichtsitz 18"' von der Düsennadel 4 ab und stützt sich an dem Halterungselement 22 ab. Der zweite Strömungsquerschnitt ist nun ebenfalls freigegeben.

In den Figuren 4a und 4b ist der Hochdruckbereich 16 im Vergleich zu den Figuren 3a und 3b nochmals vergrößert worden. Durch den Einsatz des Ventilkolbens 21 kann der Hochdruckbereich 16 in den Hohlraum 25 des Ventilkolbens 21 erweitert werden. Dabei wird der Hochdruckbereich 16 innerhalb des Hohlraums 25 durch den Metallbalg 7 und dem Ventilelement 5 begrenzt.

Der Metallbalg 7 bildet zusammen mit dem Ventilelement 5 in jedem der Ausführungsbeispiele des Ventils 1 aus den Figuren 1 (a, b) bis 4 (a, b) einen flexiblen zweiten Dichtsitz 18, 18', 18", 18"' aus. Aufgrund der elastischen Eigenschaften des Metallbalgs 7 kann die Freigabe des zweiten Strömungsquerschnitts im Vergleich zum ersten Strömungsquerschnitt verzögert werden. Je nach Materialwahl kann die Festigkeitseigenschaft des Metallbalgs 7 bestimmt werden und somit die elastische Verformbarkeit. Somit kann die Zeit der Verzögerung zwischen der Freigabe des ersten und des zweiten Strömungsquerschnitts über die Wahl des elastischen Materials beeinflusst werden.

Das elastische Element 7 ist vorzugsweise in den bereits erläuterten Ausführungsbeispielen als Metallbalg ausgebildet. Metallbalge eignen sich hier besonders gut, da der Metallbalg 7 in diesen Ausführungsbeispielen den Hochdruckbereich 16 von dem Niederdruckbereich 17 abdichtet und somit auch als Trennvorrichtung zum Einsatz kommt.

Durch Kombination eines starren ersten Dichtsitzes 19, 19', 19", 19"' mit einem axial versetzten flexiblen zweiten Dichtsitz 18, 18', 18", 18"' wird einerseits die statische Überbestimmtheit des Ventils 1 umgangen und andererseits können die Kräfte, die auf die Düsennadel 4 wirken und somit den Bewegungsvorgang in Längsrichtung beeinflussen, minimiert werden. Wird der Durchmesser d des ersten Dichtsitzes 19, 19', 19", 19"' zumindest annähernd so groß wie der Durchmesser d des zweiten Dichtsitzes 18, 18', 18", 18"' gewählt, können die Kräfte auf die Düsennadel 4 weitestgehend so reduziert werden, dass ein fast vollständiger Druckausgleich erreicht wird. Dabei wird der Durchmesser d der Dichtsitze hier als der kürzeste Abstand zwischen dem ersten Dichtsitz 19, 19', 19", 19"' bzw. dem zweiten Dichtsitz 18, 18', 18", 18"' und der Längsachse 10 des Ventils definiert. Die Düsennadel 4 kann somit mit geringen Kräften in Längsrichtung bewegt werden. Somit können gewöhnliche Aktoren, welche auch bei Gasventilen mit Gasdrücken bis zu 30 bar zum Einsatz kommen, verwendet werden.

Alternativ zu den gezeigten Ausführungsbeispielen ist es auch möglich, statt einem starren und einem flexiblen Dichtsitz zwei flexible Dichtsitze zu verwenden. Allerdings müssten entsprechende Hubanschläge eingerichtet werden, um einen definierten Hubbereich sowie die nötigen Dichtkräfte zu gewährleisten. Zudem wird durch die Verwendung eines Hubanschlags eine Beschädigung der flexiblen Dichtsitze vermieden. Darüber hinaus ist es auch möglich, in den gezeigten Ausführungsbeispielen statt einem Magnetaktor einen Piezoaktor zu verwenden.

## Patentansprüche

1. Ventil (1) zum Eindüsen von gasförmigem Kraftstoff mit einem Ventilgehäuse (2), in welchem ein mit gasförmigem Kraftstoff befüllbarer Druckraum (24) ausgebildet ist, in dem eine längsverschiebbare, kolbenförmige Düsennadel (4) angeordnet ist, wobei an der Düsennadel ein erster Dichtsitz (19, 19', 19", 19"') ausgebildet ist, mit dem die Düsennadel (4) mit einem an dem Ventilgehäuse (2) ausgebildeten Absatz (9, 9', 9", 9"') zum Öffnen und Schließen eines Strömungsquerschnitts von gasförmigem Kraftstoff zusammenwirkt, wobei in dem Druckraum (24) ein Hochdruckbereich (16) und ein Niederdruckbereich (17) ausgebildet sind, wobei an einem Ventilelement (5) ein zweiter Dichtsitz (18, 18', 18", 18"') ausgebildet ist, der bezüglich einer Längsachse (10) des Ventils (1) axial versetzt zu dem ersten Dichtsitz (19, 19', 19", 19"') angeordnet ist, **dadurch gekennzeichnet, dass** sich das Ventilelement (5) an einem elastischen Element (7) abstützt und wobei das elastische Element (7) den Hochdruckbereich (16) von dem Niederdruckbereich (17) trennt.

2. Ventil (1) nach Anspruch 1, **dadurch gekennzeichnet, dass** der Durchmesser (d) des ersten Dichtsitzes (19, 19', 19", 19"') zumindest annähernd so groß ist wie der Durchmesser (d) des zweiten Dichtsitzes (18, 18', 18", 18"').

3. Ventil (1) nach Anspruch 1 oder 2, **dadurch gekennzeichnet, dass** das elastische Element (7) als Metallbalg ausgebildet ist.

4. Ventil (1) nach Anspruch 1, 2 oder 3, **dadurch gekennzeichnet, dass** sich das elastische Element (7) mit einem anderen Ende an einem Absatz (8) der Düsennadel (4) abstützt.

5. Ventil (1) nach einem der vorhergehenden Ansprüche, **dadurch gekennzeichnet, dass** der erste Dichtsitz (19, 19', 19", 19"') an einem Endbereich der Düsennadel (4) ausgebildet ist.

6. Ventil (1) nach einem der vorhergehenden Ansprüche, **dadurch gekennzeichnet, dass** das Ventilelement (5) ringförmig ausgebildet ist und die Düsennadel (4) umgibt.

7. Ventil (1) nach Anspruch 1, **dadurch gekennzeichnet, dass** die Düsennadel (4) eine Längsbohrung (23) aufweist, die mit dem Druckraum (24) verbunden ist.

8. Ventil (1) nach Anspruch 1, **dadurch gekennzeichnet, dass** in dem Ventilgehäuse (2) eine Magnetspule (13) und ein mit der Düsennadel (4) verbundener Magnetanker (12) angeordnet sind.

9. Ventil (1) nach Anspruch 1, **dadurch gekennzeichnet, dass** in dem Druckraum (24) ein stempelförmiges Element (20) angeordnet ist, welches in der Längsbohrung (23) der Düsennadel (4) aufgenommen ist.

10. Ventil (1) nach Anspruch 9, **dadurch gekennzeichnet, dass** das stempelförmige Element (20) ein Teil des Ventilgehäuses (2) bildet.

11. Ventil (1) nach Anspruch 1, **dadurch gekennzeichnet, dass** in dem Druckraum (24) ein mit der Düsennadel (4) verbundener Ventilkolben (21) angeordnet ist, welcher einen Hohlraum (25) aufweist.

12. Ventil (1) nach Anspruch 11, **dadurch gekennzeichnet, dass** in dem Hohlraum (25) ein Halterungselement (22) angeordnet ist, welches ein Teil des Ventilgehäuses (2) bildet.

13. Ventil (1) nach Anspruch 12, **dadurch gekennzeichnet, dass** sich das elastische Element (7) mit einem anderen Ende an dem Halterungselement (22) abstützt.

14. Ventil (1) nach Anspruch 1, **dadurch gekennzeichnet, dass** in dem Niederdruckbereich (17) eine Schließfeder (15) angeordnet ist.

15. Ventil (1) nach Anspruch 14, **dadurch gekennzeichnet, dass** die Schließfeder (15) die Düsennadel (4) entweder direkt oder mittelbar mit einer Kraft beaufschlagt, wodurch die Düsennadel (4) mit dem an dem Ventilgehäuse (2) ausgebildeten Absatz (9, 9', 9", 9"') so zusammenwirkt, dass der Strömungsquerschnitt des gasförmigen Kraftstoffs geschlossen ist.

## Claims

1. Valve (1) for injecting gaseous fuel, having a valve housing (2) in which a pressure chamber (24) which is fillable with gaseous fuel is formed, in which pressure chamber a longitudinally displaceable piston-like nozzle needle (4) is arranged, wherein a first sealing seat (19, 19', 19", 19"') is formed on the nozzle needle, by way of which the nozzle needle (4) interacts with a shoulder (9, 9', 9", 9"') formed on the valve housing (2) for the purpose of opening and closing a flow cross section of gaseous fuel, wherein a high-pressure region (16) and a low-pressure region (17) are formed in the pressure chamber (24), wherein a second sealing seat (18, 18', 18", 18"') is formed on a valve element (5) and is arranged axially offset from the first sealing seat (19, 19', 19", 19"') with respect to a longitudinal axis (10) of the valve (1), **characterized in that**
the valve element (5) is supported against an elastic element (7), and wherein the elastic element (7) separates the high-pressure region (16) from the low-pressure region (17).

2. Valve (1) according to Claim 1, **characterized in that** the diameter (d) of the first sealing seat (19, 19', 19", 19"') is at least approximately as large as the diameter (d) of the second sealing seat (18, 18', 18", 18"') .

3. Valve (1) according to Claim 1 or 2, **characterized in that** the elastic element (7) is designed as a metal bellows.

4. Valve (1) according to Claim 1, 2 or 3, **characterized in that** the elastic element (7) is supported by another end against a shoulder (8) of the nozzle needle (4).

5. Valve (1) according to one of the preceding claims, **characterized in that** the first sealing seat (19, 19', 19", 19"') is formed at an end region of the nozzle needle (4).

6. Valve (1) according to one of the preceding claims, **characterized in that** the valve element (5) is of annular form and surrounds the nozzle needle (4).

7. Valve (1) according to Claim 1, **characterized in that** the nozzle needle (4) has a longitudinal bore (23) which is connected to the pressure chamber (24) .

8. Valve (1) according to Claim 1, **characterized in that** a magnet coil (13) and a magnet armature (12) which is connected to the nozzle needle (4) are arranged in the valve housing (2).

9. Valve (1) according to Claim 1, **characterized in that** a stamp-like element (20) which is received in the longitudinal bore (23) of the nozzle needle (4) is arranged in the pressure chamber (24).

10. Valve (1) according to Claim 9, **characterized in that** the stamp-like element (20) forms part of the valve housing (2).

11. Valve (1) according to Claim 1, **characterized in that** a valve piston (21) which is connected to the nozzle needle (4) and which has a cavity (25) is arranged in the pressure chamber (24).

12. Valve (1) according to Claim 11, **characterized in that** a holding element (22) is arranged in the cavity (25) and forms part of the valve housing (2).

13. Valve (1) according to Claim 12, **characterized in that** the elastic element (7) is supported by another end against the holding element (22).

14. Valve (1) according to Claim 1, **characterized in that** a closing spring (15) is arranged in the low-pressure region (17).

15. Valve (1) according to Claim 14, **characterized in that** the closing spring (15) either directly or indirectly applies a force to the nozzle needle (4), whereby the nozzle needle (4) interacts with the shoulder (9, 9', 9", 9"') formed on the valve housing (2) such that the flow cross section of the gaseous fuel is closed.

## Revendications

1. Soupape (1) d'injection d'un carburant gazeux, comprenant un boîtier de soupape (2) dans lequel est réalisée une chambre de pression (24) pouvant être remplie de carburant gazeux et dans laquelle est disposée une aiguille d'injection (4) en forme de piston, dans laquelle, sur l'aiguille d'injection est réalisé un premier siège d'étanchéité (19, 19', 19", 19"') par lequel l'aiguille d'injection (4) coopère avec un décrochement (9, 9', 9", 9'") réalisé sur le boîtier de soupape (2) pour ouvrir et fermer une section d'écoulement de carburant gazeux, dans laquelle, dans la chambre de pression (24) sont réalisées une zone de haute pression (16) et une zone de basse pression (17), dans laquelle, sur un élément de soupape (5) est réalisé un deuxième siège d'étanchéité (18, 18', 18", 18'") qui est disposé par rapport au premier siège d'étanchéité (19, 19', 19", 19'") de manière axialement décalée relativement à un axe longitudinal (10) de la soupape (1), **caractérisée en ce que** l'élément de soupape (5) prend appui sur un élément élastique (7), et l'élément élastique (7) sépare la zone de haute pression (16) de la zone de basse pression (17).

2. Soupape (1) selon la revendication 1, **caractérisée en ce que** le diamètre (d) du premier siège d'étanchéité (19, 19', 19", 19"') est au moins approximativement aussi grand que le diamètre (d) du deuxième siège d'étanchéité (18, 18', 18", 18'").

3. Soupape (1) selon la revendication 1 ou 2, **caractérisée en ce que** l'élément élastique (7) est réalisé sous la forme d'un soufflet métallique.

4. Soupape (1) selon la revendication 1, 2 ou 3, **caractérisée en ce que** l'élément élastique (7) prend appui par une autre extrémité sur un décrochement (8) de l'aiguille d'injection (4).

5. Soupape (1) selon l'une quelconque des revendications précédentes, **caractérisée en ce que** le premier siège d'étanchéité (19, 19', 19", 19"') est réalisé au niveau d'une zone d'extrémité de l'aiguille d'injection (4).

6. Soupape (1) selon l'une quelconque des revendications précédentes, **caractérisée en ce que** l'élément de soupape (5) est réalisé en forme d'anneau et entoure l'aiguille d'injection (4).

7. Soupape (1) selon la revendication 1, **caractérisée en ce que** l'aiguille d'injection (4) présente un perçage longitudinal (23) relié à la chambre de pression (24).

8. Soupape (1) selon la revendication 1, **caractérisée en ce que** dans le boîtier de soupape (2), une bobine magnétique (13) et un induit magnétique (12) relié à l'aiguille d'injection (4) sont disposés.

9. Soupape (1) selon la revendication 1, **caractérisée en ce que** dans la chambre de pression (24) est disposé un élément (20) en forme de poinçon reçu dans le perçage longitudinal (23) de l'aiguille d'injection (4) .

10. Soupape (1) selon la revendication 9, **caractérisée en ce que** l'élément en forme de poinçon (20) fait partie du boîtier de soupape (2).

11. Soupape (1) selon la revendication 1, **caractérisée en ce que** dans la chambre de pression (24) est disposé un piston de soupape (21) relié à l'aiguille d'injection (4) et comportant une cavité (25).

12. Soupape (1) selon la revendication 11, **caractérisée en ce que** dans la cavité (25) est disposé un élément de support (22) faisant partie du boîtier de soupape (2).

13. Soupape (1) selon la revendication 12, **caractérisée en ce que** l'élément élastique (7) prend appui par une autre extrémité sur l'élément de support (22) .

14. Soupape (1) selon la revendication 1, **caractérisée en ce que** dans la zone de basse pression (17) est disposé un ressort de fermeture (15).

15. Soupape (1) selon la revendication 14, **caractérisée en ce que** le ressort de fermeture (15) sollicite l'aiguille d'injection (4) directement ou indirectement par une force de sorte que l'aiguille d'injection (4) coopère avec le décrochement (9, 9', 9", 9'") réalisé sur le boîtier de soupape (2) de telle sorte que la section d'écoulement du carburant gazeux est fermée.
